# EUROPEAN PATENT SPECIFICATION

(11) **EP 1 288 847 B1**
(45) Date of publication and mention of the grant of the patent: **16.11.2005**
(21) Application number: 01120913.7
(22) Date of filing: 30.08.2001
(51) Int. Cl.: G06K 9/64, H04N 1/00

(54) **Method and apparatus for identifying identical images**
Verfahren und Vorrichtung zur Identifikation identischer Bilder
Procédé et dispositif d'identification d'images identiques

(43) Date of publication of application: 05.03.2003
(73) Proprietor: MATSUSHITA ELECTRIC INDUSTRIAL CO., LTD., Kadoma-shi, Osaka 571 (JP)
(72) Inventor: Schmidt, Thomas, 04159 Leipzig (DE); Saucy, Pascal, 65929 Frankfurt-am-Main (DE)
(74) Representative: Grünecker, Kinkeldey, Stockmair & Schwanhäusser Anwaltssozietät

(56) References cited:
- EP-A- 0 810 542
- EP-A- 0 834 831
- EP-A- 0 851 383
- EP-A- 1 035 736
- WO-A-00/34913
- WO-A-97/06502
- US-A- 5 870 498
- US-A- 5 982 932
- PATENT ABSTRACTS OF JAPAN vol. 1998, no. 02, 30 January 1998 (1998-01-30) & JP 09 259273 A (KAWASAKI STEEL CORP), 3 October 1997 (1997-10-03)

## Description

The present invention relates to a method and an apparatus for identifying whether or not two digital images are identical, in particular whether or not two images result from the same source image. The present invention is applicable in particular to an automated method for verifying images displayed by interactive user interfaces.

Image identity tests and testing systems for image identity are based on the comparison of a reference image and an external image. When comparing both images on a pixel by pixel basis, small defects which may result from image processing or transmission prevent a detection of identical images although both images generate the same impression for a viewer.

Another technique for image comparison is known from block matching techniques which are used in image encoding procedures. In order to reduce the coding effort, similar image portions of subsequent images are determined and used to reduce the amount of compressed image data. In order to determine a best match, pixel differences between a target block and a plurality of reference blocks of the same size having different positions are calculated. Based on the accumulated pixel differences for each of the blocks, that block position is selected having the smallest accumulated pixel differences.

Such a comparing method does not allow to identify whether or not two images are identical but only to select a most similar image.

Further examples of images identity tests are provided in the US patent 5870498 and in the international publication WO 97/06502.

In the patent US 5870498 the images of a sequence of images are prepared for transmission by comparing the characteristic of an image data portion with the characteristic of the corresponding image data portion of the immediately preceding image. The differences obtained from the comparison are matched against a threshold and depending on the result of the match, further action follow.

In the international publication WO 97/06502 an optical authenticator compares images on a pixel by pixel basis to determine if each pixel is either correct or wrong, authentication is granted according to the number of correct/wrong pixels or their ratio.

Images which result from the same source image may be deteriorated due to distortions introduced during image transmission, image editing, compression/decompression etc. Although a user would not realize such small differences, present testing systems are not able to provide an automated identification procedure.

It is the object of the present invention to provide a method and an apparatus for identifying whether or not two digital images are identical and in particular a method for verifying displayed images and a computer program product therefor.

This is achieved by the features of claim 1 for a method, by the features of claim 17 for an automated method for verifying display images, by the features of claim 18 for a corresponding apparatus and by the features of claim 19 for a computer program product.

The present invention is based on a new approach which decides on a pixel by pixel basis whether a detected difference is caused by a different image content or whether a pixel difference is introduced during image processing artefacts. For that purpose, the present invention uses a two step approach. First, a first predetermined threshold tolerates pixel value deviations introduced by a noise. Second, only a particular pixel difference pattern is taken into account, consisting of two neighboring pixel differences which exceed the noise tolerating threshold. If the number of detected different patterns does not exceed a second predetermined threshold, both images are considered identical.

This new approach provides more reliability when determining identical images. Further, slight but important differences which may lay within text portions of an image may be detected although all of the remaining pixels are identical. For instance, an image may only differ by a letter or a number such like the numbers "8" and "9".

According to a preferred embodiment, both images are considered not identical as soon as the counted number of the particular difference pattern exceeds the predefined threshold. Such a criterion for terminating the image comparison procedure results in an accelerated test procedure as, in contrast to known systems, the invention does not require to process all pixel positions in such circumstances.

According to a preferred embodiment, the noise tolerating threshold is selected depending on the expected noise level. Thus, the method may be adapted to the particular application, namely the amount of noise introduced during image processing or transmitting. Further, based on such an adaptive noise level threshold, the present invention may be used to assess the image quality of processed or broadcast images. In image quality applications, the method determines whether a particular degree of distortions is still acceptable for a viewer.

An acceptable number of the distortion pattern is preferably selected depending on either the amount of pixels to be processed, the resolution of the smallest image details to be detected or the noise characteristic. The larger the number of pixels to be compared the more frequently the distortion pattern may be detected. Thus, the "distortion pattern threshold" should take the size of the images into account and accept a higher number of the distortion pattern in larger images.

When small details of an image are to be detected, the threshold has to be set accurately in order to detect for instance a single pixel difference which might result from a different image detail such like different characters or numbers.

Further, the characteristic of the noise may also influence the selection of the second threshold. Noise having a large portion of heavy distortions will result in a higher detected number of the pixel distortion pattern. Thus, the threshold should be adapted in accordance with the noise characteristic.

In a preferred embodiment of the present invention, the noise tolerating threshold tolerates pixel value variations corresponding to 10 to 20 percent of the pixel value range. Using such an adaptable threshold, the present invention may be used for different image representation without requiring an adaptation.

According to another embodiment, said second threshold being adapted to the number of pixels processed according to a fixed proportion. Consequently, the method is self adaptive to the size of the images.

Preferably, the detection of the particular pixel distortion pattern evaluates the four closest neighboring pixel positions, namely the pixel positions above, below, left and right of the current pixel. Such a pattern of neighboring pixels reduces the hardware effort for the comparison procedure.

According to another preferred embodiment, all pixel positions surrounding a current pixel position are evaluated as neighboring pixels. Such a pattern of neighboring pixels provides a fine distortion pattern resolution without a considerable increase of the computational effort.

According to a further preferred embodiment, only those pixel positions of the eight surrounding pixels are evaluated which are not processed yet. Such a pattern of forward orientated neighboring pixel positions prevents a double counting of the distortion patterns and corresponding calculation means or steps may be omitted.

Preferably, the number of the neighboring pixel positions evaluated is selected depending on the required resolution for detecting smallest image details. Such an approach provides the best comparison results using the smallest computational and hardware effort.

Further preferred embodiments additionally provide an off-set tolerant identification method and apparatus. In order to compensate for vertical off-sets, the pixel distortion pattern is separately counted for each line of pixels.

Each line of the current image is compared to neighboring lines in both vertical directions of the reference image. According to one embodiment, each line contributes to the final counting result only with that line which has the smallest pixel differences. Thus, vertical off-sets are taken into account without preventing to detect identical images.

According to another embodiment a particular line is skipped as soon as a vertical line off-set is detected. Such an approach requires less hardware effort.

Lateral pixel off-sets may be tolerated by a further embodiment calculating for each pixel position also pixel differences with respect to the neigboring pixel positions in the same line. As soon as a lateral pixel off-set is detected, this pixel is skipped from the comparison procedure. Such an approach enables to detect identical images despite lateral off-sets of individual pixels.

According to another aspect of the present invention, the method for identifying identical images is applied to an automated method for verifying displayed images. Such images are frequently used in user interactive interfaces. Such an automated verifying procedure provides an automated test of "image responses" for all kinds of display devices.

Further embodiments of the present invention are the subject-matter of dependent claims.

Further features and advantages will become more apparent from the following description of the present invention as illustrated in the accompanying drawings, wherein:
Fig. 1 illustrates a schematic diagram of a configuration for testing a set-top box user interface display behavior.
Fig. 2 shows a schematic diagram illustrating the procedure of comparing a current and a reference image.
Fig. 3 illustrates the required resolution for detecting image differences depending on the size of image details to be detected.
Figures 4a, 4b, 4c illustrate a flow-chart of the method according to a preferred embodiment of the present invention.
Figures 5a, 5b, 5c illustrate different patterns of neighboring pixels.

The illustrative embodiments of the present invention will now be described with reference to the drawings.

A main application of the present invention is an automated test procedure for graphical user interfaces, in particular integrated into video tape-recorders, video disc players, television receivers, set-top boxes, etc.

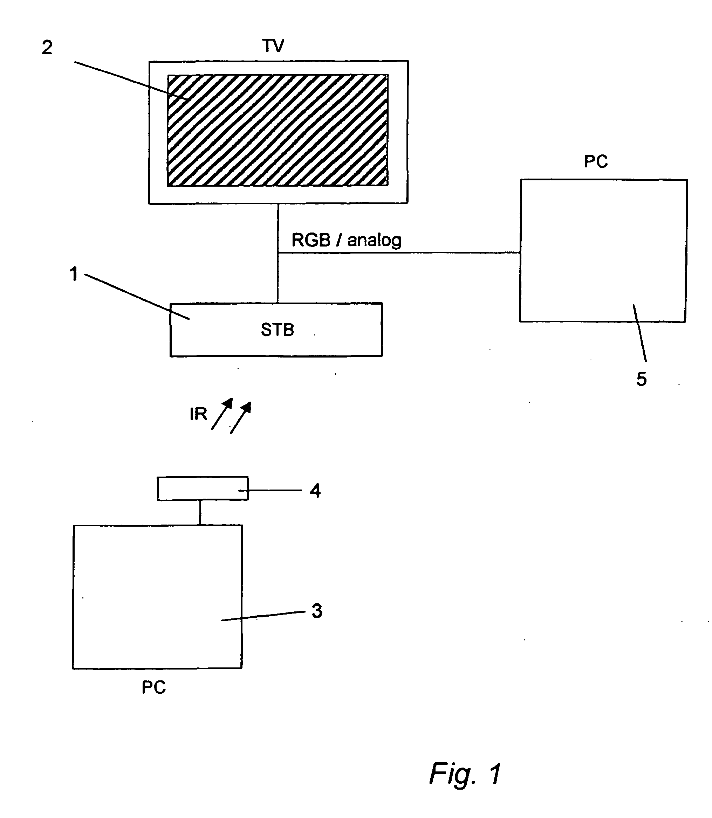

Fig. 1 illustrates the configuration of an automated test procedure for a display response behavior of set-top boxes (STB). STB 1 is preferably connected to a display device 2 for displaying predefined images depending on a user input command. STB 1 receives user commands from a remote control 4 transmitting commands via modulated infrared rays. To provide an automated test procedure, both, the input device 4 for user commands and the STB's output are controlled using a computer system. The remote control is connected to computer system 3. Thus, remote control 4 may be controlled to transmit a predefined set of user commands to STB 1.

STB 1 is further connected to computer system 5 which also receives the STB's output to display device 2. Computer system 5 automatically identifies whether an output image corresponds to the expected image.

Computer systems 3 and 5 may be integrated into a single computer system.

STB 1 selects an image to be displayed depending on a user input and depending on the present state or selected mode.

STB 1 stores a plurality of images to be displayed. The same images are stored in computer system 5 as reference images to be compared with the displayed STB 1 image. Both images, the reference image and the currently displayed image, have the same image source. However, the image stored in STB 1 may be processed and converted to an analog RGB representation. Such image processing may introduce image distortions, in particular noise and pixel off-set. These distortions are hardly recognized by a user but complicate the identification procedure. Such differences are detected by computer system 5 but they do not represent visually perceivable image content differences.

During an automated test procedure, STB 1 does not need to be connected to display device 2 as the output display signals have only to be supplied to computer system 5 for evaluating whether a correct image is output.

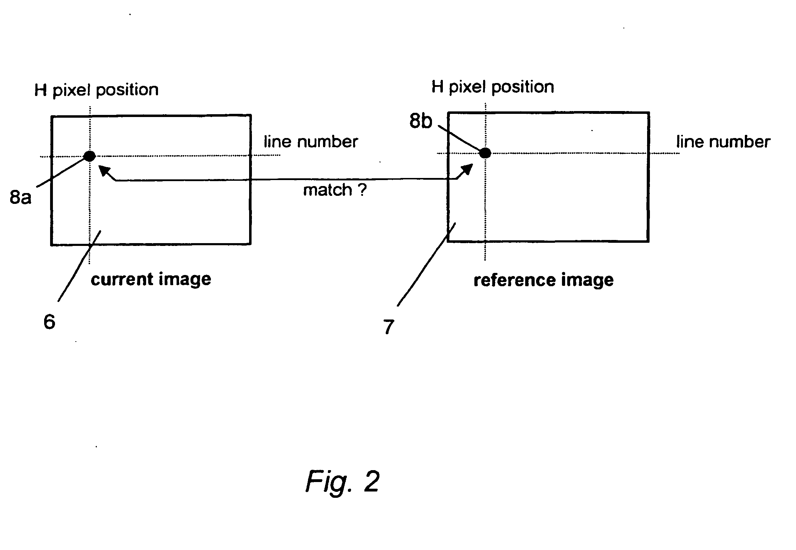

Figure 2 illustrates in a simplified manner the comparison procedure used to identify whether both images are identical or not. Pixel values of corresponding pixel positions in both images, the current image 6 and the reference image 7, are read out and the pixel values 8a and 8b at the corresponding positions are compared

When comparing both pixel values 8a and 8b, the present invention tolerates a predetermined difference in order to compensate for noise distortions. Only pixel differences which exceed a predetermined noise level, are further evaluated whether or not such a difference results from image content differences.

The test procedure of the present invention only focuses on those image portions for which a difference is detected exceeding the predetermined noise tolerating threshold. Both images are only considered to be identical if the method of the present invention does not detect a particular predefined "distortion pattern" a predetermined number of times.

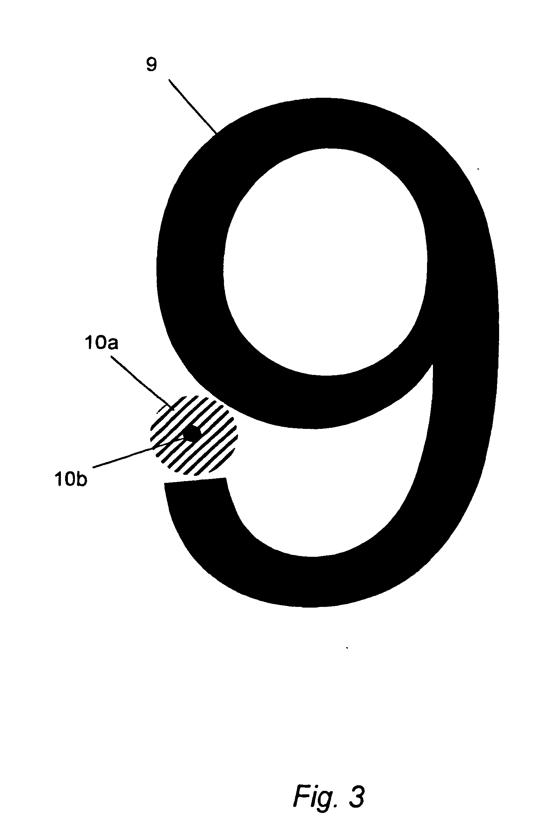

The particular "design" of the "distortion pattern" and the number of distortion patterns to be detected depends among others from the size of the smallest details of the image content to be detected. An example for illustrating the impact of the size of smallest details of the image content on the detection procedure is illustrated in Fig. 3. It might happen that two of the images only differ by one character or a number. As illustrated in Fig. 3, number "9" can only reliably differentiated from number "8" by detecting opening 10. In case only few pixel values 10a (for instance two pixels) would fill opening 10, a single detection of a "distortion pattern" would indicate a different image content. In contrast, if a large number of pixels 10b is required to fill opening 10, a larger number of detected "distortion patterns" may be used to reliably detect the image content difference.

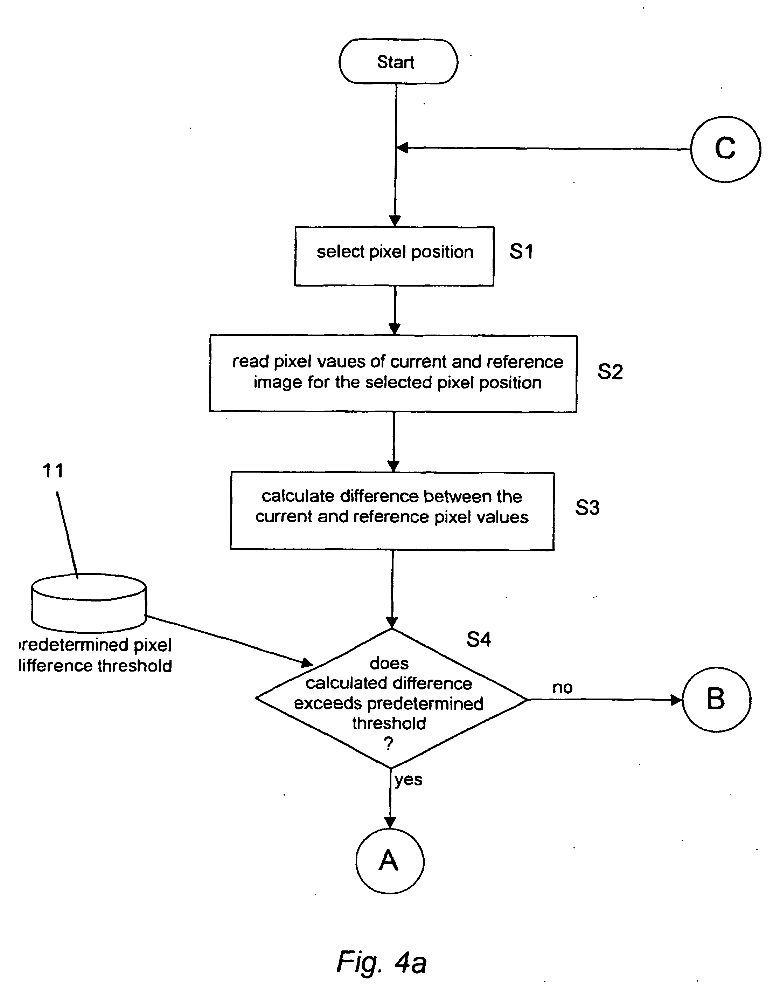

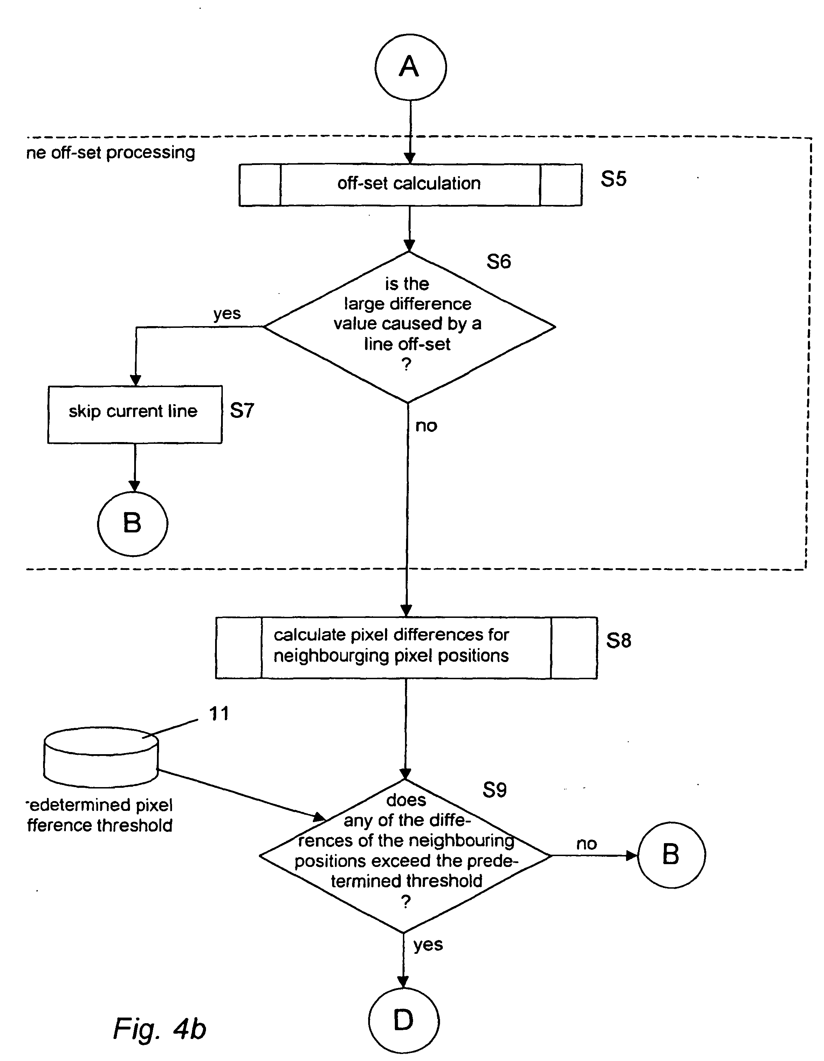

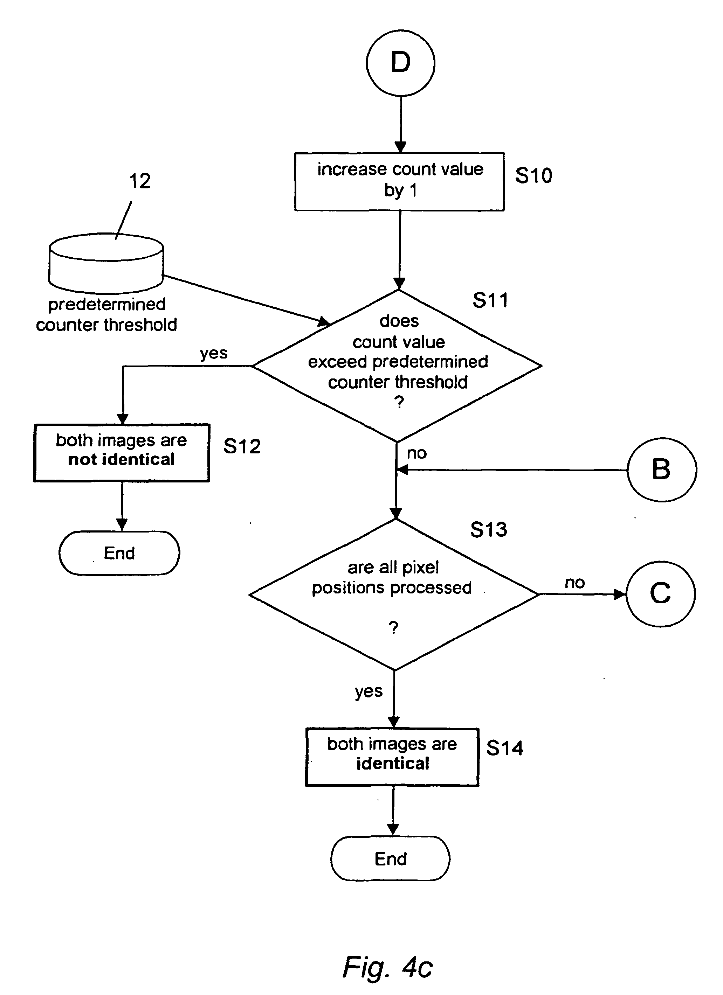

A flow-chart shown in Figure 4 (consisting of Figures 4a, 4b and 4c) illustrates a preferred embodiment for a method of identifying whether or not two images are identical.

In a first step S1, a particular pixel position in the images is selected. As can be seen from Figure 2, a horizontal pixel position and a vertical pixel position (a particular line number) is commonly selected for current image 6 and reference image 7.

According to a preferred embodiment, only a particular image portion is taken into account for testing both images on identity. Then, pixel positions are only selected from that or those predetermined image portion(s). These image portions may differ for each of the tested images.

The pixel values 8a and 8b at the selected position in both images 6, 7 are read out from corresponding image memories (step S2). A pixel difference is calculated from both pixel values (step S3) and compared to a predetermined pixel difference threshold. The predetermined difference threshold represents the tolerable noise level and is stored in memory 11.

In case the difference between both pixel values 8a and 8b does not exceed the predetermined threshold (step S4), the test procedure returns to step S1 for selecting another pixel position.

In case the calculated difference exceeds the predetermined threshold (step S4) the test procedure evaluates whether any of the neighboring pixel positions has a pixel difference exceeding said predetermined pixel difference threshold (steps S8 and S9).

According to a preferred embodiment of the present invention, the "distortion pattern" consists of two neighboring pixels exceeding said predetermined pixel difference threshold. Such a pattern appears to be appropriate in order to differentiate image content differences from noise distortions. According to the statistical equal distribution of noise distortions, large distortions are hardly affecting neighboring pixel positions.

As those skilled in the art would appreciate, the present invention is not limited to this particular distortion pattern as a plurality of other distortion patterns is suitable for this purpose. For instance, any two pixels having a predefined distance in between may be used for this purpose. Alternatively, the number of pixels of the "distortion pattern" may be increased from 2 to 3 or 4 pixels.

Which of the neighboring pixels are taken into account for detecting a predefined distortion pattern does not only depend on the kind of the "distortion pattern" used but also on the required hardware effort, the amount of noise present in the image, etc.

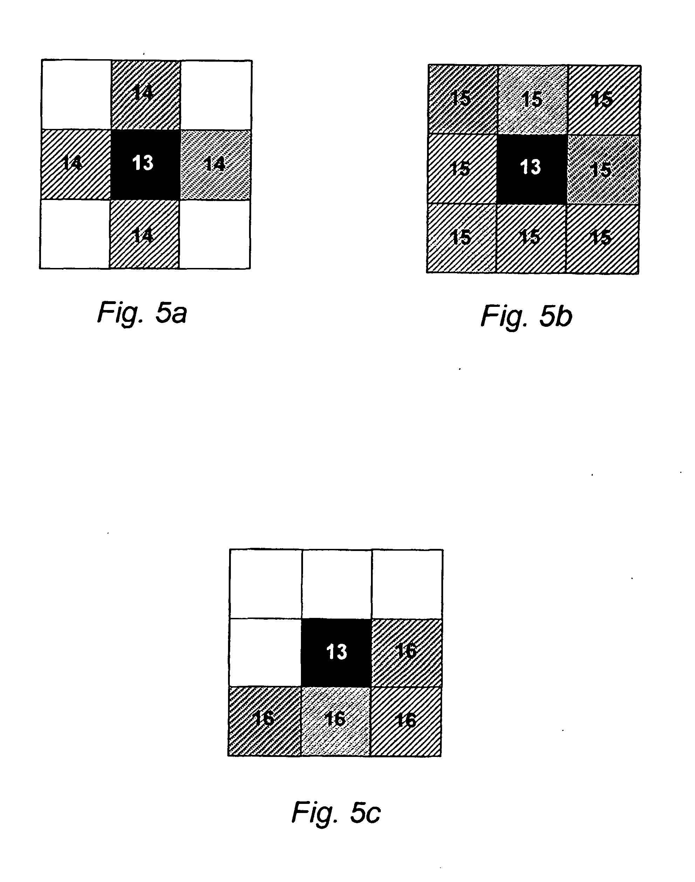

Figure 5 illustrates three different possible patterns for neighboring pixel positions. According to Fig. 5a, only those pixel positions 14 are considered which are directly adjacent to the current pixel position 13, namely above, below, left and right of current pixel position 13.

According to another embodiment, all pixel positions 15, surrounding the current pixel position 13 are evaluated (Fig. 5b).

According to still another embodiment, only those pixel positions which have not yet been processed by the test procedure and are located next to the current pixel position 13 are taken into account. For processing all pixels of an image starting at the upper left hand position, Fig. 5c illustrates pixel positions 16 which are taken into account in step S5.

In steps S8 and S9, pixel values are compared at predefined neighboring pixel positions (Fig. 5) in the same manner as described in steps S2 to S4. Only in case for at least one of the neighboring pixel positions a pixel difference value exceeding the predefined pixel difference threshold is detected, the predefined distortion pattern is detected (step S9). In case more than one "distortion pattern" is to be detected (depending on the second threshold), a counter is increased by one each time the distortion pattern is detected (step S10).

As soon as the count results exceeds a predetermined counter threshold stored in memory 12, both images are considered being not identical (steps S11 and S12). After detecting that both images are not identical, the test procedure for a current pair of images is terminated.

In case the count value does not exceed the predetermined threshold stored in memory 12, a judgment is performed whether all pixel positions to be compared are already processed. Only in case there are still remaining pixel positions to be compared, the test procedure returns to step S1. Otherwise, both images are identified to be identical (step S14) and the test procedure for the particular pair of images is terminated.

In case of colored pictures, the image test is preferably performed based on the luminance value of each pixel position. As those skilled in the art will appreciate, the test procedure is not fixed to any kind of image representation, but may be used based on any pixel component of image data. For instance, when using RGB image components, either each component alone or the sum of the respective color values for each pixel position may be compared with the corresponding value at the corresponding pixel position. In addition, if images of different image formats (either by color representation, by pixel range or by the number of pixels) are used, the values to be compared have to be adapted to each other in order to enable a reliable test.

Another problem addressed to by the present invention is to tolerate a pixel off-set between both images. Conventionally, the image content of pixels at corresponding positions in both images, the current image 6 and the reference image 7, are compared. Due to image processing including format conversion etc, it might happen that particular pixels are shifted to a neighboring pixel position. Conventionally, such pixel off-sets results in a detection of a different image content by automated test procedures although a human observer would not perceive any difference.

To overcome lateral and vertical off-sets, both kinds of off-sets are handled differently. In order to handle a lateral off-set, a pixel difference calculated for a current pixel position is compared to pixel differences calculated in consideration of lateral pixel off-sets. Thus, for instance five difference values are calculated for a particular pixel position of the current image, wherein the corresponding pixel of the reference image having one of the following lateral off-set values: -2, -1, 0, 1, 2. As those skilled in the art will appreciate, there may be used less or more pixel off-set values. The larger the number of used off-set values is the more computational effort is required for each pixel.

The calculated pixel differences are compared with each other. If any of the pixel differences calculated with a lateral off-set larger than 0 results in a smaller pixel difference than calculated for the 0 lateral off-set position, the current pixel is skipped and the test procedure proceeds with the selection of another pixel position (step S1). In contrast, if the pixel difference for the 0 off-set is the smallest calculated pixel difference for the current pixel position, the test procedure continues with the step S4 or step S8 depending on the insertion position of the off-set handling into the test procedure.

The procedure for a vertical pixel shift is configured differently. In order to overcome a vertical line off-set, the calculation for each image line is handled separately. After calculating the pixel differences in accordance with steps S1 to S11 for a particular line, the same procedure is carried out for the same line using a plurality of line off-sets, namely by comparing a current line with a reference line having a line off-set of, for example, -2, -1, 0, +1, +2. The pixel differences for each of these off-sets are calculated and stored in a memory. In addition, the number of "distortion patterns" occurring within each pixel line are counted and stored in association with the particular pixel difference values.

After the calculation procedure has been performed for all line off-set values, the pixel differences calculated for each line are compared and that line is selected having the smallest pixel differences. Preferably, when calculating the pixel differences for a particular line, the calculated differences are accumulated and for each line the accumulated differences together with the number of detected "distortion patterns" are stored. That number of counted distortion patterns is selected having the smallest accumulated pixel difference value stored therewith. This calculation procedure is repeated for each of the image lines. Thus, a vertical line off-set will be easily compensated without deterioration of the test result.

According to an alternative embodiment, only the accumulated pixel differences are stored per line. If it turns out that the line calculated with a 0 line off-set does not have the smallest accumulated pixel differences, the pixels of this line are omitted from the test procedure and the test continues with step S1 and selecting a new pixel position of another line. This procedure is illustrated in the box designated "line off-set processing" in Fig. 4 including steps S5, S6 and S7. These steps represent only a particular embodiment for tolerating line off-sets.

The present invention is based on two threshold values which may be adaptively set depending on the particular test environment. In the following, a procedure for determining such threshold values are described. Reliable threshold values for a particular test environment may be calculated by performing a plurality of pseudo test runs. These test runs are conducted with pre-set threshold values. These threshold values are adapted iteratively if it turns out that "identical" images are not judged to be identical.

Initial values used for these test runs are preferably too low in order to stepwisely approximate appropriate threshold values.

In contrast, if the thresholds are larger than appropriate, smaller content differences cannot be detected and small image differences such as described in connection with Fig. 3 cannot be detected. Thus, test runs using slightly differing "non-identical" images have to provide a corresponding test result. Otherwise, the presently used threshold has to reduced.

In order not to count "distortion patterns" twice if the distortion pattern contains two pixel difference values exceeding the predetermined threshold, one of the following strategies may be applied. According to a first embodiment, a distortion pattern is only detected and counted for that pixel position having the largest pixel difference from the neighboring pixel differences exceeding the first threshold.

According to another embodiment, only those neighboring pixels are taken into account which have not been processed yet. Thus, the above described comparing step may be omitted for detecting the largest pixel difference. This may be accomplished using a "neighboring pixel position" pattern according to Fig. 5c.

The description of the principles of different embodiments of the present invention is now followed by a description of a preferred detailed embodiment.

When comparing two images, a current image 6 and a reference image 7, which both have a number of 800 pixels per line and 600 lines per image, a total of 480,000 pixels have to be compared (when all pixels positions are taken into account). In order to reduce the computational effort, the number of pixels to be compared may be reduced, for instance by reducing the resolution and taking only every second pixel into account. For each of these pixels, a difference has to be calculated with respect to the corresponding pixel position of the reference image as described in connection with Fig. 2.

Assuming a pixel value range of 0 to 255, a first example pixel in a first line of a current image may have the RGB pixel values of red = 100, green = 60 and blue = 110. The accumulated sum is 270.

The first pixel in the first line of the reference image 7 may have a triple of pixel values of red = 90, green = 70 and blue = 101, resulting in a sum of 261.

When comparing both pixel positions based on the accumulated values, the resulting pixel difference is 9.

As this pixel position has no direct neighbors above and on the left hand side, the number of neighbors is considerably reduced.

The following three cases for the subsequent processing have to be differentiated:

First, the pixel difference does not exceed the first threshold value:

Assuming the first threshold value is 40, then the pixel difference of 9 does not exceed this threshold. The test procedure is continued with a next of the remaining pixel positions out of the 480,000 pixel positions.

Second, the pixel difference exceeds the threshold:

Assuming the first threshold value is 5, then the pixel difference of 9 exceeds the threshold and all neighboring pixel positions have to be evaluated in a corresponding manner, all three neigboring pixel positions of the upper left pixel. The pixel difference for each of these pixel positions will be calculated and compared with the first threshold. Only in case another one of these pixel differences exceeds the threshold value, the "distortion pattern" of the preferred embodiment of the present invention is detected and the count value is increased by one. Otherwise, the test procedure continues with the next pixel position, preferably with the next pixel position of the same line.

Third, the pixel difference exceeds the threshold, but due to a line off-set:

If it turns out that the second line of the reference image has smaller accumulated pixel differences, then the counted number of "distortion patterns" detected using that line off-set is selected for the total number of detected differences.

Summarizing, the present invention relates to a new approach for identifying whether or not two images are identical, in particular whether or not both images result from the same source image. The images are compared pixel by pixel. A first threshold tolerates pixel differences which are caused by noise distortions. Pixel differences exceeding this threshold are only counted as reliable image content differences in case a particular distortion pattern is detected. Such an image distortion pattern preferably judges whether a neighboring pixel also exceeds the first threshold value. Only in case the detected number of distortion patterns does not exceed a predetermined threshold, both images are considered identical.

## Claims

1. A method for identifying whether or not two digital images, a current image (6) and a reference image (7), are identical, each of the digital images consists of pixels arranged at a plurality of pixel positions, the method comprises the steps of:
receiving a current image (6) to be compared with said reference image (7)
**characterized by the steps of**
counting a number of pixel positions fulfilling the following condition:
a difference between pixel values at a corresponding pixel position (8a, 8b) in both images (6, 7) exceeds a first predetermined threshold, and
a difference between pixel values at at least one of the neighboring pixel positions (14; 15; 16) in both images (6, 7) exceeds said first predetermined threshold, and
identifying both images to be identical if the counted number of pixel positions does not exceed a second predetermined threshold after all pixel positions of a predefined number of pixel positions are processed.

2. A method according to claim 1, further comprising the step of identifying both images to be not identical as soon as the counted number of pixel positions exceeds said second predetermined threshold.

3. A method according to claim 1 or 2, wherein said first predetermined threshold is selected depending on the noise level of at least on of both compared images.

4. A method according to any of claims 1 to 3, wherein said first predetermined threshold tolerates pixel differences up to a difference value between 10 and 20 percent of the pixel value range of the pixels, in particular tolerating pixel differences up to a value between 25 and 50 for a pixel value range of 0 to 255.

5. A method according to any of claims 1 to 4, wherein said second predetermined threshold being selected depending on the number of detectable differences between both images which is considered acceptable for identical images.

6. A method according to claim 5, wherein the second predetermined threshold being selected depending on at least on of the number of pixels processed, the resolution of the smallest image details to be detected, and the noise characteristic of the noise in the images.

7. A method according to any of claims 1 to 6, wherein said second predetermined threshold being in fixed proportion to the number of pixel positions processed per image.

8. A method according to any of claims 1 to 6, wherein said second predetermined threshold having the value of 2.

9. A method according to any of claims 1 to 8, wherein said counting step calculates pixel difference for those four neighboring pixel positions (14) being located directly above, below, left and right with respect to the current pixel position (13).

10. A method according to any of claims 1 to 8, wherein said counting step calculates pixel differences for those eight neighboring pixel positions (15) surrounding the current pixel position (13).

11. A method according to any of claims 1 to 8, wherein said counting step calculates pixel difference only for those neighboring pixel positions (16) for which the pixel difference has not been already calculated during the counting step of the previous pixels.

12. A method according to any of claims 1 to 8, wherein the number of neighboring pixel positions taken into account in said counting step is selected depending on the resolution of the smallest image details (10a, 10b) to be detected.

13. A method according to any of claims 1 to 12, wherein said counting step comprises the steps of:
counting said pixel positions for each of the lines of the current image repeatedly employing a different line off-set from a predefined set of line off-set values, respectively,
selecting for each of the lines a counting result which corresponds to a line off-set that causes the smallest pixel differences between the pixels of both images for that line, and
accumulating the counting results selected for each of the lines.

14. A method according to any of claims 1 to 12, wherein said counting step comprises the steps of:
counting said pixel positions for each of the lines of the current image repeatedly employing a different line off-set from a predefined set of line off-set values, respectively,
selecting for each of the lines the counting result calculated with a line off-set of 0 if the differences between the pixel values using the line off-set of 0 are smaller compared to the differences resulting from the other line off-set values, or omitting the pixels of the current line from the procedure in the other cases, and
accumulating the counting results selected for each of the lines.

15. A method according to claim 13 or 14, wherein the counting step employs the following line off-set values for each of the lines for calculating a line number of the reference image with respect to a line number of the current image: -2, -1, 0, +1, +2.

16. A method according to any of claims 1 to 15, wherein said counting step comprises the steps of:
comparing for each pixel position a pixel difference of a current pixel position (8) calculated without a lateral pixel off-set with pixel differences calculated for a current pixel position employing a lateral pixel off-set, and
exclude the current pixel position from the counting procedure if a pixel difference calculated employing a lateral pixel off-set is smaller than the pixel difference calculated without a lateral pixel off-set.

17. An automated method for verifying displayed images of an interactive user interface, comprising the steps of:
inputting one of a plurality of predetermined commands to the interface and waiting for a corresponding display result,
reading out a reference image depending on the input command, and
identifying whether or not said reference image and the display result are identical using a method according to any of claims 1 to 16.

18. An apparatus for identifying whether or not two digital images, a current image (6) and a reference image (7), are identical, each of the digital images consists of pixels arranged at a plurality of pixel positions, comprising:
an image memory for storing a reference image (7),
a threshold memory for storing a first and a second predetermined threshold,
a calculating means for calculating differences between pixel values,
a comparator for comparing one of said predetermined thresholds with another value,
a counter adapted to count a number of pixel positions which fulfill the following condition:
a difference between pixel values at a corresponding pixel position (8a, 8b) in both images (6, 7) calculated by said calculating means exceeds said first predetermined threshold according to said comparator, and
a difference between pixel values at at least one of the neighboring pixel positions (14; 15; 16) in both images (6, 7) calculated by said calculating means exceeds said first predetermined threshold according to said comparator, and
indicating means adapted to indicate that both images are identical based on a comparator result between the counted number of pixel positions and said second predetermined threshold indicating that said counted number does not exceed said second predetermined threshold after all pixel positions of a predefined plurality of pixel positions are processed.

19. A computer program product comprising a computer readable medium having computer readable program code embodied thereon, the program code being adapted to carry out all the steps of claim 1.

## Patentansprüche

1. Verfahren zur Erkennung, ob zwei digitale Bilder, ein aktuelles Bild (6) und ein Referenzbild (7), identisch sind, wobei jedes der digitalen Bilder aus Pixeln besteht, die an einer Vielzahl von Pixelpositionen angeordnet sind, das Verfahren umfasst die Schritte:
Empfangen eines aktuellen Bildes (6), das mit dem Referenzbild (7) zu vergleichen ist,
**gekennzeichnet durch die Schritte**
Zählen einer Anzahl von Pixelpositionen, die die folgende Bedingung erfüllen:
eine Differenz zwischen Pixelwerten an entsprechenden Pixelpositionen (8a, 8b) in beiden Bilder (6, 7) überschreitet einen ersten vorbestimmten Schwellwert und
eine Differenz zwischen Pixelwerten an zumindest einer der benachbarten Pixelpositionen (14; 15; 16) in beiden Bildern (6, 7) überschreitet den ersten vorbestimmten Schwellwert und
Erkennen, dass beide Bilder identisch sind, wenn die gezählte Anzahl von Pixelpositionen einen zweiten vorbestimmten Schwellwert nicht überschreitet, nachdem alle Pixelpositionen einer vorbestimmten Anzahl von Pixelpositionen verarbeitet sind.

2. Verfahren nach Anspruch 1, das außerdem den Schritt der Erkennung beider Bilder als nicht identisch umfasst, sobald die gezählte Anzahl von Pixelpositionen den zweiten vorbestimmten Stellwert überschreitet.

3. Verfahren nach Anspruch 1 oder 2, wobei der erste vorbestimmte Schwellwert in Abhängigkeit von dem Rauschpegel von zumindest einem der beiden verglichenen Bilder ausgewählt wird.

4. Verfahren nach einem der Ansprüche 1 bis 3, wobei der erste vorbestimmte Schwellwert Pixeldifferenzen bis zu einem Differenzwert zwischen 10 °lo und 20 % des Pixelwertbereichs der Pixel toleriert, insbesondere Pixeldifferenzen bis zu einem Wert zwischen 25 und 50 für einen Pixelwertbereich zwischen 0 und 255 toleriert.

5. Verfahren nach einem der Ansprüche 1 bis 4, wobei der zweite vorbestimmte Schwellwert in Abhängigkeit von der Anzahl der detektierbaren Differenzen zwischen beiden Bildern, die für identische Bilder als akzeptabel angesehen werden, ausgewählt wird.

6. Verfahren nach Anspruch 5, wobei der zweite vorbestimmte Schwellwert in Abhängigkeit von zumindest der Anzahl der verarbeiteten Pixel, der Auflösung der kleinsten zu detektierenden Bilddetails oder der Rauschcharakteristik des Rauschens in den Bildern ausgewählt wird.

7. Verfahren nach einem der Ansprüche 1 bis 6, wobei der zweite vorbestimmte Schwellwert in festem Verhältnis zur Anzahl der Pixelpositionen, die pro Bild verarbeitet werden, festgelegt wird.

8. Verfahren nach einem der Ansprüche 1 bis 6, wobei der zweite vorbestimmte Schwellwert den Wert 2 besitzt.

9. Verfahren nach einem der Ansprüche 1 bis 8, wobei der Zählschritt Pixeldifferenzen für diejenigen vier benachbarten Pixelpositionen (14) berechnet, die direkt oberhalb, unterhalb, links und rechts in Bezug zu der aktuellen Pixelposition (13) angeordnet sind.

10. Verfahren nach einem der Ansprüche 1 bis 8, wobei der Zählschritt Pixeldifferenzen für diejenigen acht benachbarten Pixelpositionen (15) berechnet, die die aktuelle Pixelposition (13) umgeben.

11. Verfahren nach einem der Ansprüche 1 bis 8, wobei der Zählschritt Pixeldifferenzen nur für diejenigen benachbarten Pixelpositionen (16) berechnet, für die die Pixeldifferenz noch nicht während des Zählschritts der vorhergehenden Pixel berechnet wurde.

12. Verfahren nach einem der Ansprüche 1 bis 8, wobei die Anzahl benachbarter Pixel positionen, die in dem Zählschritt berücksichtigt wird, in Abhängigkeit von der Auflösung der kleinsten zu selektierenden Bilddetails (10a, 10b) ausgewählt wird.

13. Verfahren nach einem der Ansprüche 1 bis 12, wobei der Zählschritt die Schritte umfasst:
Zählen der Pixelpositionen für jede der Zeilen des aktuellen Bildes unter jeweils wiederholter Verwendung eines unterschiedlichen Zeilenversatzes aus einem vorbestimmten Satz von Zeilenversatzwerten,
Auswählen eines Zählergebnisses für jede der Zeilen, wobei das Zählergebnis einem Zeilenversatz entspricht, der die kleinsten Pixeldifferenzen zwischen den Pixeln beider Bilder für diese Zeile verursacht, und
Akkumulieren der Zählergebnisse, die für jede der Zeilen ausgewählt wurden.

14. Verfahren nach einem der Ansprüche 1 bis 12, wobei der Zählschritt die Schritte umfasst:
Zählen der Pixelpositionen für jede der Zeilen des aktuellen Bildes unter wiederholter Verwendung jeweils eines Zeilenversatzes aus einem vorbestimmten Satz von Zeilenversatzwerten,
Auswählen des Zählergebnisses für jede der Zeilen, wobei das Zählergebnis mit einem Zeilenversatz von Null berechnet wird, wenn die Differenzen zwischen den Pixelwerten unter Verwendung des Zeilenversatzes von Null kleiner als die Differenzen sind, die von anderen Zahlenversatzwerten herrühren, oder Auslassen der Pixel der aktuellen Zeile aus dem Verfahren in den anderen Fällen, und
Akkumulieren der Zählergebnisse, die für jede der Zeilen ausgewählt wurden.

15. Verfahren nach Anspruch 13 oder 14, wobei der Zählschritt die folgenden Zeilenversatzwerte für jede der Zeilen zur Berechnung einer Zeilenzahl des Referenzbildes in Bezug zu einer Zeilenzahl des aktuellen Bildes verwendet: - 2,-1,0,+1,+2.

16. Verfahren nach einem der Ansprüche 1 bis 15, wobei der Zählschritt die Schritte umfasst:
Vergleichen für jede Pixelposition eine Pixeldifferenz einer aktuellen Pixelposition (8), die ohne seitlichen Pixelversatz berechnet wurde, mit Pixeldifferenzen, die für eine aktuelle Pixelposition unter Verwendung eines seitlichen Pixelversatzes berechnet wurden, und
Ausschließen der aktuellen Pixelposition aus dem Zählverfahren, wenn eine Pixeldifferenz, die unter Verwendung eines seitlichen Pixelversatzes berechnet wurde, kleiner ist als die Pixeldifferenz, die ohne einen seitlichen Pixelversatz berechnet wurde.

17. Ein automatisiertes Verfahren zur Verifizierung angezeigter Bilder einer interaktiven Benutzerschnittstelle mit den Schritten:
Eingeben einer Mehrzahl von vorbestimmten Befehlen an die Schnittstelle und Warten auf ein entsprechendes Anzeigeergebnis,
Auslesen eines Referenzbildes in Abhängigkeit von dem Eingangsbefehl und
Erkennen, ob das Referenzbild und das Anzeigeergebnis unter Verwendung eines Verfahrens nach einem der Ansprüche 1 bis 16 identisch sind.

18. Vorrichtung zur Erkennung, ob zwei digitale Bilder, ein aktuelles Bild (6) und ein Referenzbild (7), identisch sind, wobei jedes der digitalen Bilder aus Pixeln besteht, die an einer Vielzahl von Pixelpositionen angeordnet sind, umfassend:
einen Bildspeicher zum Speichern eines Referenzbildes (7),
einen Schwellwertspeicher zum Speichern eines ersten und eines zweiten vorbestimmten Schwellwertes,
eine Berechnungseinrichtung zur Berechnung von Differenzen zwischen Pixelwerten,
einen Vergleicher zum Vergleichen eines der vorbestimmen Schwellwerte mit einem anderen Wert,
einen Zähler, der zum Zählen einer Anzahl von Pixelpositionen angepasst ist, die die folgende Bedingung erfüllen:
eine Differenz zwischen Pixelwerten an entsprechenden Pixelpositionen (8a, 8b) in beiden Bildern (6, 7), die von der Berechnungseinrichtung berechnet wurde, überschreitet den ersten vorbestimmten Schwellwert gemäß dem Vergleicher und
eine Differenz zwischen Pixelwerten an zumindest einer der benachbarten Pixelpositionen (14; 15; 16) in beiden Bildern (6, 7), die von der Berechnungseinrichtung berechnet wurde, überschreitet den ersten vorbestimmten Schwellwert gemäß dem Vergleicher und
eine Anzeigeeinrichtung, die angepasst ist anzuzeigen, dass beide Bilder basierend auf dem Vergleichsergebnis zwischen der gezählten Anzahl von Pixelpositionen und dem zweiten vorbestimmten Schwellwert identisch sind, wobei das Vergleichsergebnis angibt, dass die gezählte Anzahl nicht den zweiten vorbestimmten Schwellwert überschreitet, nachdem alle Pixelpositionen einer vorbestimmten Mehrzahl von Pixelpositionen verarbeitet wurde.

19. Computerprogrammprodukt mit einem computerlesbaren Medium, das einen computerlesbaren Programmcode darauf enthält, wobei der Programmcode angepasst ist, alle Schritte des Anspruchs 1 auszuführen.

## Revendications

1. Procédé pour identifier si oui ou non deux images numériques, une image actuelle (6) et une image de référence (7), sont identiques, chacune des images numériques est constituée de pixels disposés à une pluralité de positions de pixel, le procédé comprend les étapes consistant à :
recevoir une image actuelle (6) qui doit être comparée à ladite image de référence (7)
**caractérisé par** les étapes consistant à :
compter un nombre de positions de pixel satisfaisant à la condition suivante :
une différence entre les valeurs de pixel à une position de pixel correspondante (8a, 8b) dans les deux images (6, 7) dépasse un premier seuil prédéterminé, et
une différence entre les valeurs de pixel d'au moins une des positions de pixels voisins (14 ; 15 ; 16) dans les deux images (6, 7) dépasse ledit premier seuil prédéterminé, et
identifier les deux images comme étant identiques si le nombre compté des positions de pixel ne dépasse pas un second seuil prédéterminé après que toutes les positions de pixel d'un nombre prédéfini de positions de pixel soient traitées.

2. Procédé selon la revendication 1, comprenant, en outre, l'étape consistant à identifier que les deux images ne sont pas identiques dès que le nombre compté de positions de pixel dépasse ledit second seuil prédéterminé.

3. Procédé selon la revendication 1 ou 2, dans lequel ledit premier seuil prédéterminé est sélectionné en fonction du niveau du bruit d'au moins une des deux images comparées.

4. Procédé selon l'une quelconque des revendications 1 à 3, dans lequel ledit premier seuil prédéterminé tolère des différences de pixel jusqu'à une valeur de différence située entre 10 et 20 pour cent de la plage des valeurs de pixel des pixels, en particulier tolérant des différences de pixel jusqu'à une valeur située entre 25 et 50 pour une plage de valeur de pixel de 0 à 255.

5. Procédé selon l'une quelconque des revendications 1 à 4, dans lequel ledit second seuil prédéterminé qui doit être sélectionné est fonction du nombre des différences détectables entre les deux images qui est considéré acceptable pour des images identiques.

6. Procédé selon la revendication 5, dans lequel le second seuil prédéterminé qui doit être sélectionné est fonction d'au moins un élément parmi le nombre des pixels traités, la résolution des détails d'image les plus petits qui doivent être détectés, et de la caractéristique du bruit dans les images.

7. Procédé selon l'une quelconque des revendications 1 à 6, dans lequel ledit second seuil prédéterminé est dans une relation proportionnellement fixe au nombre des positions de pixel traitées par image.

8. Procédé selon l'une quelconque des revendications 1 à 6, dans lequel ledit second seuil prédéterminé présente la valeur de 2.

9. Procédé selon l'une quelconque des revendications 1 à 8, dans lequel ladite étape de comptage calcule la différence de pixel pour les quatre positions de pixels voisins (14) qui sont placées directement au-dessus, en dessous, à gauche et à droite par rapport à la position de pixel actuelle (13) .

10. Procédé selon l'une quelconque des revendications 1 à 8, dans lequel ladite étape de comptage calcule les différences de pixel pour les huit positions de pixels voisins (15) entourant la position de pixel actuelle (13).

11. Procédé selon l'une quelconque des revendications 1 à 8, dans lequel ladite étape de comptage ne calcule la différence de pixel que pour les positions de pixels voisins (16) pour lesquelles la différence de pixel n'a pas été déjà calculée pendant l'étape de comptage des pixels précédents.

12. Procédé selon l'une quelconque des revendications 1 à 8, dans lequel le nombre des positions de pixels voisins pris en compte dans ladite étape de comptage est sélectionné en fonction de la résolution des détails d'image les plus petits (10a, 10b) qui doivent être détectés.

13. Procédé selon l'une quelconque des revendications 1 à 12, dans lequel ladite étape de comptage comprend les étapes consistant à :
compter lesdites positions de pixel pour chacune des lignes de l'image actuelle de manière répétée en employant un décalage de ligne différent à partir d'un ensemble prédéfini de valeurs de décalage de ligne, respectivement,
sélectionner pour chacune des lignes un résultat de comptage qui correspond à un décalage de ligne qui amène les différences de pixel les plus petites entre les pixels des deux images pour cette ligne, et
accumuler les résultats du comptage sélectionnés pour chacune des lignes.

14. Procédé selon l'une quelconque des revendications 1 à 12, dans lequel ladite étape de comptage comprend les étapes consistant à :
compter lesdites positions de pixel pour chacune des lignes de l'image actuelle de manière répétée en employant un décalage de ligne différent à partir d'un ensemble prédéfini de valeurs de décalage de ligne, respectivement,
sélectionner pour chacune des lignes le résultat du comptage calculé avec un décalage de ligne de 0 si les différences entre les valeurs de pixel utilisant le décalage de ligne de 0 sont plus petites comparées aux différences résultant des autres valeurs de décalage de ligne ou omettre les pixels de la ligne actuelle de la procédure dans les autres cas, et
accumuler les résultats du comptage sélectionnés dans chacune des lignes.

15. Procédé selon la revendication 13 ou 14, dans lequel l'étape de comptage emploie les valeurs de décalage de ligne suivantes pour chacune des lignes pour calculer un numéro de ligne de l'image de référence par rapport à un numéro de ligne de l'image actuelle : -2, -1, 0, +1, +2.

16. Procédé selon l'une quelconque des revendications 1 à 15, dans lequel ladite étape de comptage comprend les étapes consistant à :
comparer pour chaque position de pixel une différence de pixel d'une position de pixel actuelle (8) calculée sans décalage de pixel latéral aux différences de pixel calculées pour une position de pixel actuelle employant un décalage de pixel latéral, et
exclure la position de pixel actuelle de la procédure de comptage si une différence de pixel calculée employant un décalage de pixel latéral est plus petite que la différence de pixel calculée sans décalage de pixel latéral.

17. Procédé automatisé pour vérifier des images affichées d'une interface utilisateur interactive, comprenant les étapes consistant à :
entrer un ordre d'une pluralité d'ordres prédéterminés dans l'interface et attendre pour un résultat d'affichage correspondant,
extraire une image de référence en fonction de l'ordre entré, et
identifier si oui ou non ladite image de référence et le résultat affiché sont identiques en utilisant un procédé selon l'une quelconque des revendications 1 à 16.

18. Appareil pour identifier si oui ou non des images numériques, une image actuelle (6) et une image de référence (7), sont identiques, chacune des images numériques étant constituée de pixels disposés à une pluralité de positions de pixel, comprenant :
une mémoire d'image pour mémoriser une image de référence (7),
une mémoire de seuil pour mémoriser des premier et second seuils prédéterminés,
un moyen de calcul pour calculer les différences entre les valeurs de pixel,
un comparateur pour comparer un desdits seuils prédéterminés à une autre valeur,
un compteur adapté pour compter un nombre de positions de pixel qui satisfait les conditions suivantes :
une différence entre les valeurs de pixel à une position de pixel correspondante (8a, 8b) dans les deux images (6, 7)
calculée par ledit moyen de calcul dépasse ledit premier seuil prédéterminé en conformité avec ledit comparateur, et
une différence entre les valeurs de pixel à au moins une des positions de pixels voisins (14 ; 15 ; 16) dans les deux images (6, 7) calculée par ledit moyen de calcul dépasse ledit premier seuil prédéterminé en conformité avec ledit comparateur, et
un moyen d'indication conçu pour indiquer que les deux images sont identiques sur la base du résultat du comparateur entre le nombre compté des positions de pixel et ledit second seuil prédéterminé indiquant que ledit nombre compté ne dépasse pas ledit second seuil prédéterminé après que toutes les positions de pixel d'une pluralité prédéfinie de positions de pixel soient traitées.

19. Produit de programme d'ordinateur comprenant un support lisible par ordinateur ayant un code programme lisible par ordinateur incorporé sur celui-ci, le code programme étant adapté pour exécuter toutes les étapes de la revendication 1.
